Europäisches Patentamt

European Patent Office

Office européen des brevets

(11) Numéro de publication: **0 202 990 B1**

# FASCICULE DE BREVET EUROPEEN

(45) Date de publication de fascicule du brevet:
28.08.91

(51) Int. Cl.⁵: **F16J 13/10**, F15B 1/047

(21) Numéro de dépôt: 86400933.7

(22) Date de dépôt: 29.04.86

(54) **Enceinte étanche pour fluides à haute pression.**

(30) Priorité: 03.05.85 FR 8506730

(43) Date de publication de la demande:
26.11.86 Bulletin 86/48

(45) Mention de la délivrance du brevet:
28.08.91 Bulletin 91/35

(84) Etats contractants désignés:
CH DE FR IT LI

(56) Documents cités:
FR-A- 2 179 295
FR-A- 2 498 267
US-A- 4 351 450

(73) Titulaire: **HYDRO RENE LEDUC (Société Anonyme)**
**Allée René Leduc Azerailles**
**F-54120 Baccarat(FR)**

(72) Inventeur: **Porel, Louis Claude**
**Rue de Moulins Jeanmenil**
**F-88700 Rambervillers(FR)**

(74) Mandataire: **Loyer, Bertrand et al**
**Cabinet Pierre Loyer 77, rue Boissière**
**F-75116 Paris(FR)**

## Description

La présente invention a pour objet une enceinte étanche pour fluide à haute pression, cette enceinte pouvant être un réservoir de gaz comprimé aussi bien qu'un accumulateur hydraulique rempli pour partie d'un gaz comprimé et pour partie d'un liquide hydraulique sous pression.

Il est connu de réaliser des enceintes de ce genre sous la forme d'une bouteille en acier d'un seul morceau de façon que cette bouteille ne présente aucune zone de faiblesse. Dans le cas où cette enceinte est destinée à la réalisation d'un accumulateur hydraulique, on introduit par le goulot une vessie déformable que l'on munit d'un bouchon et que l'on remplit d'un gaz sous pression ; tandis que l'on dispose sur le côté du goulot une arrivée pour le liquide hydraulique. Dans le cas où cette enceinte est destinée à contenir uniquement un gaz sous pression tel que air comprimé, gaz combustible , azote, hydrogène ou oxygène, on fixe un robinet sur le goulot.

Ce genre d'enceinte présente de nombreux inconvénients. Dans le cas d'emploi de ces enceintes pour contenir du gaz comprimé, l'inconvénient majeur est le poids de ces bouteilles qui est considérable par rapport au faible poids du gaz contenu ; cela est notamment le cas pour des bouteilles destinées à contenir les mélanges gazeux pour chalumeaux oxydriques ou encore pour les bouteilles d'air comprimé pour les plongeurs sousmarins. L'autre inconvénient provient de ce que les parois internes de ces bouteilles s'oxydent plus ou moins à l'usage, ce qui exige des vérifications et des ré-épreuves régulières de ces bouteilles. Le nettoyage des parois internes de ces bouteilles au moyen d'un outil que l'on introduirait par le goulot est pratiquement impossible de sorte que l'on est amené à mettre ces bouteilles à la réforme de façon prématurée.

Les bouteilles de plongée sous-marine par exemple doivent être passées au banc d'essai tous les cinq ans, opérations au cours desquelles elles sont sablées intérieurement ; or ce sablage n'est jamais satisfaisant car il est impossible de sabler correctement et de façon uniforme un récipient fermé à son extrémité.

D'autre part, les travaux de la demanderesse l'ont amenée à constater qu'une enceinte fermée dont la paroi interne est polie résiste mieux à la fatigue, due à l'alternance de mise en pression et hors pression, qu'une paroi rugueuse. En effet, la demanderesse a fait subir des cycles de mise en pression suivie d'annulation de pression à une enceinte constituée par un tube cylindrique, fermé à ces deux extrémités, dont la paroi interne n'avait pas été usinée : ce tube a présenté des symptômes de fatigue du métal après un million de cycles. Un tube identique a alors été usine intérieurement , ce qui a évidemment diminué l'épaisseur du métal ; puis ce tube a été soumis aux mêmes variations de pression que le tube précédent. Ce deuxième tube ne présentait aucun symptôme de fatigue de métal après un million de cycles ; l'essai a été repris et l'on a pu constater qu'il n'y avait aucune trace de fatigue du métal ni après 2 millions de cycles ni même après 3 millions de cycles. Cet essai a été répété un certain nombre de fois avec des tubes de longueurs et d'épaisseurs différentes et les résultats ont toujours été les mêmes. Il en résulte donc que la tenue à la fatigue d'une enceinte devant contenir des fluides liquides ou gazeux sous pression est considérablement améliorée si la paroi interne de l'enceinte est usinée de façon à être polie, mais cela est impossible avec les bouteilles usuelles à goulot et à fond fermé.

Dans la demande de brevet français FR-A-24 98 267 au nom du demandeur , on a décrit un accumulateur constitué par un simple tube cylindrique fermé à ses deux extrémités par un bouchon retenu par un joint torique.

Cependant, le demandeur s est aperçu que lorsque le bouchon était soumis à des pressions élevées, l'orifice du tube s'évasait (ou s'élargissait) sous l'effet de la pression et le bouchon était projeté hors du tube cylindrique.

En, procédant à de nombreux essais le demandeur s'est aperçu que contrairement à ce que l'on pouvait penser la loi de variation de la pression maximum d'éclatement du bouchon hors du tube ne variait pas de façon régulière en fonction de la distance séparant le jonc de l'extrémité du tube ; mais au contraire que cette pression est pratiquement constante jusqu'à une position limite du jonc après laquelle elle chute brusquement.

Cette position limite est celle à partir de laquelle le vecteur R de la résultante des efforts appliqués au jonc ne traverse plus la totalité de l'épaisseur du tube.

Une telle disposition a déjà été proposée dans le brevet US-A-4 351 450 montrant une gorge de positionnement du jonc torique de forme spécialement étudiée afin que ledit jonc soit en appui sur les deux parois de celle-ci. La résultante des efforts passe alors par le fond de la gorge suivant une direction telle qu'elle traverse la totalité de l'épaisseur du tube. Une telle gorge de forme épitoroïdale est d'un usinage complexe et cher c'est pourquoi la demanderesse propose une autre forme de réalisation d'une enceinte offrant de bonnes caractéristiques

La présente invention concerne donc une enceinte étanche pour fluides à haute pression du type comportant un corps central cylindrique fermé à au moins une de ses extrémités par un bouchon inséré à l'intérieur dudit corps central cylindrique et étant bloqué contre tout effort tendant à le faire sortir par un jonc torique, reposant d'une part contre un épaulement circulaire oblique ménagé dans ledit bouchon et d'autre part dans une gorge ménagée dans la paroi interne du corps cylindrique et transmettant les efforts de compression qu'il supporte selon une résultante R portée par une droite traversant toute l'épaisseur E du corps de l'enceinte, caractérisée en ce que la gorge est au moins partiellement cylindrique de même rayon que le jonc ce qui amène ladite résultante R à être perpendiculaire à l'épaulement circulaire oblique et à passer par le centre du jonc et en ce que la pente dudit épaulement circulaire oblique est comprise entre 30° et 40° de façon que l'angle A que fait la résultante R avec la direction axiale du corps soit compris entre 30° et 40°

A titre d'exemple et pour faciliter la compréhension de l'invention, on a représenté aux dessins annexés :

Figure 1, une vue schématique en demi-coupe d'une enceinte selon l'invention ;

Figure 2, une vue à échelle agrandie d'un détail de la figure 1;

Figures 3 à 5, trois vues en coupe longitudinale d'accumulateurs de différents volumes réalisés conformément à l'invention.

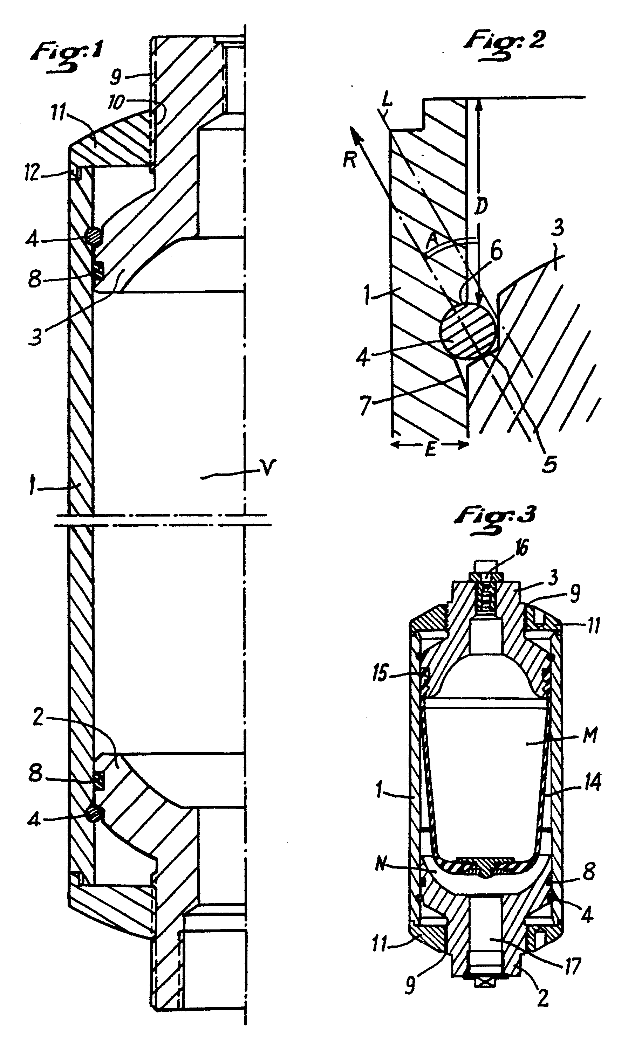

La figure 1 représente de façon schématique le montage d'une enceinte pouvant résister à de hautes pressions internes, cette enceinte étant par exemple destinée à contenir un gaz comprimé à haute pression.

Cette enceinte est constituée par un corps central tubulaire 1, poli intérieurement et ouvert à ses deux extrémités qui sont fermées chacune par un bouchon 2 et 3. Dans l'exemple représenté, les bouchons 2 et 3 sont identiques. Chaque bouchon 2 et 3 a un diamètre externe égal au diamètre interne du corps tubulaire 1 et est enfoncé à l'intérieur de l'extrémité correspondante dudit corps tubulaire. Le blocage de chaque bouchon 2 ou 3 contre tout déplacement hors du corps tubulaire 1 est réalisé au moyen d'un jonc torique 4.

Comme cela est illustré de façon plus précise sur la figure 2, chaque boulon 2 ou 3 comporte une couronne circulaire 5 inclinée de façon que le contact entre le jonc 4 et le bouchon 2 ou 3 se fasse selon une surface inclinée. Il en résulte que la force d'impulsion agissant sur le bouchon 2 ou 3 s'exerce sur le jonc 4 selon une résultante R qui est perpendiculaire à la surface 5 et passe par 1 centre du jonc 4. Ce dernier repose dans une gorge circulaire 6 dont la section semi-circulaire est de même rayon que le jonc 4.

Les divers essais auxquels a procédé la demanderesse ont montré que la pente de l'épaulement circulaire oblique 5 devait être comprise entre 30° et 45° de façon que l'angle A que fait la résultante R avec la direction axiale du corps central 1 soit compris entre 30° et 45°. Cette disposition a pour effet que le jonc torique 4 travaille en compression et non pas en cisaillement. Les essais ont en effet démontré que lorsque le jonc torique 4 travaille en cisaillement sous des pressions supérieures à 250 bars, il était détruit en moins d'un million de cycles ; alors qu'il résiste parfaitement lorsqu'il travaille en compression.

Cependant, le fait que le jonc torique 4 travaille en compression a pour résultat que les forces résultantes R tendent à évaser l'extrémité du tube 1. Cet évasement peut atteindre des dimensions telles que le bouchon 2 ou 3 s'échappe.

Les travaux de la demanderesse ont permis de constater que même si l'on calcule l'épaisseur "E" de la paroi du tube central 1 pour que ledit tube puisse résister, sans fatigue du métal, à la pression maximum, l'extrémité du tube s'évase si l'on ne prend pas une précaution supplémentaire consistant à déterminer la distance "D" entre l'extrémité du tube 1 et le jonc 4 de telle sorte que la résultante R traverse toute l'épaisseur de la paroi du tube 1. En d'autres termes, en se reportant à la figure 2, la droite portant la résultante R doit être en dessous de la position limite figurée par la droite "L" représentée en tiretés. De préférence, comme cela est représenté à la figure 2, on détermine "D" avec une marge de sécurité suffisante pour être sûr que R est toujours en dessous de "L".

Comme indiqué précédemment, la surface interne du tube 1 est usinée de façon à supprimer les défauts de surfaces, mais il n'est pas nécessaire de procéder à un polissage de finition.

La pression régnant en V applique fortement les deux bouchons 2 et 3 contre les joncs 4 et l'étanchéité est obtenue par des joints 8 de type usuel.

Cependant, il faut éviter que lorsqu'il n'y a plus de pression les bouchons 2 et 3 ne coulissent à l'intérieur du tube 1. Dans ce brevet, chaque bouchon 2 ou 3 comporte un filetage 9 sur lequel vient se visser, au moyen d'un filetage correspondant, une coupelle 11, qui vient prendre appui sur l'extrémité du tube 1. De préférence, chaque coupelle 11 est centrée sur le tube 1 par un rebord 12 qui s'emboîte dans un épaulement 13, de forme correspondante, ménagé sur le pourtour de l'extrémité du tube 1.

L'enceinte aux figures 1 et 2 permet de réaliser de façon très économique des enceintes destinées à recevoir des gaz sous pression , qui présentent, en plus l'avantage d'être moins lourdes que les bouteilles actuellement utilisées et surtout l'avantage d'être très facilement vérifiées puisqu'il suffit de dévisser les coupelles 11 pour faire coulisser les bouchons, ce qui permet d'enlever les joncs 4 et les deux bouchons : les surfaces internes des parois en contact avec le gaz sous pression peuvent alors être inspectées, vérifiées, nettoyées ou polies si nécessaire.

Le mode de réalisation décrit aux figures 1 et 2 est une simple enceinte ou bouteille pouvant recevoir un fluide unique sous pression, en se reportant aux figures 3 à 5, on voit qu'une telle enceinte peut très avantageusement être utilisée pour réaliser un accumulateur oléo-pneumatique. Il suffit en effet de remplacer un des joints 8 par une membrane souple en caoutchouc 14. En se reportant aux figures 3 à 5, on voit que la membrane 14 comporte un talon 15 qui vient à la place du joint d'étanchéité 8 du bouchon 3. De plus le bouchon 3 comporte une valve 16 permettant d'introduire un gaz comprimé, de l'azote par exemple dans l'enceinte M, à l'intérieur de la poche définie par la membrane 14 et le bouchon 3 ; tandis que le bouchon 2 est percé d'un conduit 17 qui permet de relier l'enceinte N à un circuit hydraulique.

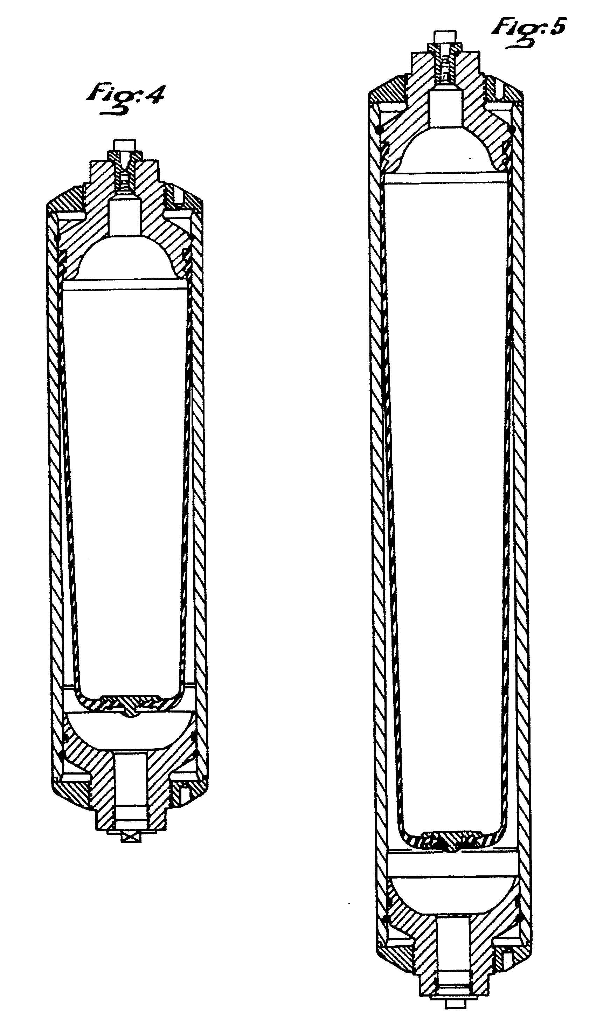

Les figures 4 et 5 représentent des accumulateurs oléo-pneumatiques identiques en tous points à celui de la figure 3, seule la longueur du tube 1 et de la membrane 14 ayant été modifiée. On voit que l'on peut ainsi, à partir d'éléments standards, réaliser une gamme complète d'accumulateurs de capacités différentes (On peut de la même façon avoir des bouteilles telles que celle de la figure 1, ayant des volumes V différents).

Le demandeur a procédé à des essais avec des accumulateurs correspondant aux figures 4 et 5 destinés à être utilisés avec une pression maximum d'utilisation de 400 bars.

Pour être conforme aux règlements français, il faut que la pression d'éclatement de tels accumulateurs soit au moins trois fois supérieure à la pression maximum d'utilisation ; c'est-à-dire , dans le cas des accumulateurs essayés, de 1.200 bars.

Les accumulateurs essayés avaient un diamètre intérieur de 97 mm, un diamètre extérieur de 114 mm (donc une épaisseur de 8,5 mm) ;leur capacité (ou volume interne) était de 1 litre, 2,5 litres ou 4 litres suivant la longueur du tube, celle-ci n'ayant aucune influence sur la valeur de la pression d'éclatement. Le diamètre du jonc 4 était de 5 mm.

A. Lorsque la distance D était égale à 10 mm du bord du tube, la pression moyenne d'éclatement était de l'ordre de 750 bars.

B. Lorsque cette distance D était égale à 15 mm, la pression moyenne d'éclatement était de l'ordre de 900 bars.

C. Lorsque cette distance D était égale à 20 mm, la pression moyenne d'éclatement était toujours supérieure à 1.200 bars.

D. Lorsque la distance D était supérieure à 20 mm, soit 25 et 30 mm, il n'y a eu qu'une très faible augmentation de la pression d'éclatement.

De plus, et cela a été également très surprenant, il s' est avéré que dans les cas A et B les essais de fatigue par variation de la pression entre O et 400 bars en cycles continues ont fait apparaître une durée de vie comprise entre 71.000 et 262.000 cycles ; alors que dans les cas C et D ,les essais ont été arrêtés :la première fois à 2.250.000 cycles et la deuxième fois à 2.360.000 cycles sans qu'il n'y ait eu aucune détérioration.

Il s'avère donc que la valeur limite de la distance assure non seulement une pression d'éclatement nettement supérieure , mais encore une durée de vie qui est au moins dix fois supérieure (dans certains cas 30 fois).

D'autre part, le fait que le corps de l'accumulateur est constitué par un tube cylindrique procure un avantage considérable .Les corps d'accumulateurs actuellement employés sont soit sphériques, soit des bouteilles à fond fermé. Cette configuration ne permet pas de procéder à un usinage et un polissage des parois internes de l'accumulateur , seul le polissage des parois externes étant possible. Lorsqu'elles sont à l'état brut , les surfaces ont une rugosité qui, à l'échelle A (norme internationale de mesure de rugosité> est de R.A. = 6,3 microns. Il y a donc en surface une multiplicité de micro-fissures qui constituent, chacune, une amorce de rupture. Le corps 1 de l'accumulateur selon l'invention étant un tube cylindrique ouvert à ses deux extrémités, son usinage est très aisé : on peut ainsi l'amener à un état de surface de R.A. = 0,8 micron. Les micro-fissures sont alors éliminées et le métal résiste considérablement mieux à la fatigue, ce qui est un des facteurs permettant d'atteindre , en essais, plus de deux millions de cycles sans la moindre détérioration des constituants de l'accumulateur.

De plus, selon la présente invention, les deux bouchons 11 sont vissés sur les bouchons 2 et 3 lorsque l'accumulateur est mis à sa pression maximum de service. Ainsi si l'accumulateur doit fonctionner à une pression de service maximum de 400 bars, il est d'abord mis à cette pression de 400 bars , et les coupelles 11 sont vissées sur les bouchons 2 et 3. Il en résulte que, lorsque la pression et relachées, les deux extrémités du tube 1 sont mis en compression entre le jonc 4 et chaque coupelle 11 soit sur la distance D. Chacune des deux extrémités du tube 1 se trouve alors sous pré-contrainte, ce qui participe à l'amélioration de la résistance à la fatigue de l'accumulateur.

## Revendications

1. Enceinte étanche pour fluides à haute pression du type comportant un corps central cylindrique (1) fermé à au moins une de ses extrémités par un bouchon (2, 3, 20) inséré à l'intérieur dudit corps central cylindrique et étant bloqué contre tout effort tendant à le faire sortir par un jonc torique (4), reposant d'une part contre un épaulement circulaire oblique (5) ménagé dans ledit bouchon (2, 3, 20) et d'autre part dans une gorge (6) ménagée dans la paroi interne du corps cylindrique et transmettant les efforts de compression qu'il supporte selon une résultante (R) portée par une droite traversant toute l'épaisseur (E) du corps (1, 21) de l'enceinte, caractérisée en ce que la gorge (6) est au moins partiellement cylindrique de même rayon que le jonc (4) ce qui amène ladite résultante (R) à être perpendiculaire à l'épaulement circulaire oblique (5) et à passer par le centre du jonc (4) et en ce que la pente dudit épaulement circulaire oblique (5) est comprise entre 30° et 40° de façon que l'angle (A) que fait la résultante (R) avec la direction axiale du corps (1) soit compris entre 30° et 40°

2. Enceinte selon la revendication 1, caractérisée par le fait que le corps de l'enceinte (1) est tubulaire, ouvert à ses deux extrémités qui comportent chacune un bouchon (2, 3).

3. Enceinte selon la revendication 2 comportant une membrane en caoutchouc (14) divisant le volume intérieur de l'enceinte en deux enceintes séparées (M, N) de façon à constituer un accumulateur oléo-pneumatique.

4. Enceinte selon la revendication 3, caractérisée par le fait que chaque bouchon d'extrémité (2 et 3) comporte un filetage (9) sur lequel vient se visser une coupelle (11) prenant appui sur les bords de l'extrémité du tube cylindrique (1).

5. Enceinte selon la revendication 4, caractérisée par le fait que les coupelles (11) sont vissées lorsqu'elle soumise à sa pression maximum de service de sorte que les portions de tube (1) comprises entre le jonc (4) et la coupelle (11) sont sous précontrainte.

6. Enceinte selon l'une quelconque des revendications 1 à 5, caractérisée par le fait que les parois interne et externe du tube sont usinées et polies.

## Claims

1. A fluid-tight enclosure for high-pressure fluids, of the type comprising a cylindrical central body (1) closed at at least one of its ends by a plug (2, 3, 20) inserted inside said central body and being blocked against any stress tending to push it out by means of a toric retainer ring (4) resting respectively against a slanted circular shoulder (5) formed in said plug (2, 3, 20) and inside a groove (6) formed in the inner wall of the cylindrical body, said ring (4) transmitting the compression strains to which it is subjected along a resultant (R) carried by a straight line passing through the whole thickness (E) of the body (1, 21) of the enclosure, **characterized** in that the groove (6) is at least partly cylindrical with the same radius as the retainer ring (4), thereby causing the said resultant (R) to be perpendicular to the slanted circular shoulder (5) and to pass through the center of the retainer ring (4) and in that the slant of the said slanted circular shoulder (5) is comprised between 30° and 40° so that the angle (A) formed by the resultant (R) with the axial direction of the body (1) will be comprised between 30° and 40°.

2. An enclosure according to Claim 1, characterized in that the enclosure body (1) is tubular and opened at both its ends, each one of which comprises a plug (2, 3).

3. An enclosure according to Claim 2, comprising a rubber membrane (14) dividing the inner volume of the enclosure into two separate enclosures (M, N) so as to constitute an oleo-pneumatic accumulator.

4. An enclosure according to Claim 3, characterized in that each end plug (2 and 3) comprises a thread (9) on which is screwed a dish-shaped nut (11) resting against the edges of the end of the cylindrical tube (1).

5. An enclosure according to Claim 4, characterized in that the dish-shaped nuts (11) are screwed on when said enclosure is subjected to its maximum operating pressure, so that the portions of the tube (1) included between the retainer ring (4) and the dish-shaped nut (11) are pre-stressed.

6. An enclosure according to any one of Claims 1 - 5, characterized in that the inner and outer walls of the tube (1) are machined and polished.

## Patentansprüche

1. Flüssigkeitsdichter Behälter für Hochdruckflüssigkeiten mit einem zylindrischen Mittelkörper (1), der an wenigstens einem seiner Enden durch einen Deckel (2, 3) verschlossen ist, der in das Innere des zylindrischen Mittelkörpers eingeführt ist und gegen jegliche Kraft, die ihn herauszuschieben versucht, mittels eines torusförmigen Rings (4) blockiert wird, der einerseits auf einem kreisförmigen, schrägen, im Deckel (2, 3) ausgebildeten Absatz (5) sowie andererseits auf einer in der Innenwand des zylindrischen Körpers ausgebildeten Vertiefung (6) sitzt und die Druckkräfte, die er abstützt, entlang einer Resultierenden (R) überträgt die auf einer durch die gesamte Breite (E) des Behälterkörpers (1) hindurch verlaufenden Geraden liegt, **dadurch gekennzeichnet, daß** die Vertiefung (6) wenigstens teilweise mit dem gleichen Radius wie der Ring (4) zylindrisch ausgebildet ist, so daß die Resultierende (R) senkrecht zum kreisförmigen, schrägen Absatz (5) sowie durch die Mitte des Ringes (4) verläuft, und daß die Neigung des kreisförmigen schrägen Absatzes (5) zwischen $30°$ und $40°$ beträgt, so daß der Winkel (A), den die Resultierende (R) mit der Längsrichtung des Körpers (1) einschließt, zwischen $30°$ und $40°$ beträgt.

2. Behälter nach Anspruch 1, dadurch gekennzeichnet, daß der Behälterkörper (1) rohrförmig ausgebildet und an seinen beiden Enden, deren jedes einen Deckel (2, 3) aufweist, offen ist.

3. Behälter nach Anspruch 2, mit einer Membrane (14) aus Kautschuk, die das Innenvolumen des Behälters in zwei getrennte Behälter (M, N) zur Ausbildung eines Öl-Druckluft-Speichers aufteilt.

4. Behälter nach Anspruch 3, dadurch gekennzeichnet, daß jeder Enddeckel (2 und 3) ein Gewinde (9) aufweist, auf das eine Abdeckscheibe (11) aufschraubbar ist, die sich gegen die Ränder der Enden des Zylinderrohres (1) abstützt.

5. Behälter nach Anspruch 4, dadurch gekennzeichnet, daß die Abdeckscheiben (11) aufgeschraubt werden, während der Behälter unter seinem maximalen Gebrauchsdruck steht, so daß die Bereiche des Rohres (1) zwischen dem Ring (4) und der Abdeckscheibe (11) unter Vorspannung stehen.

6. Behälter nach einem der Ansprüche 1 bis 5, dadurch gekennzeichnet, daß die Innen- und Außenwände des Rohres maschinell bearbeitet und poliert sind.

Fig.1

Fig.2

Fig.3

Fig:4

Fig:5